# EUROPEAN PATENT SPECIFICATION

(11) **EP 1 296 769 B1**
(45) Date of publication and mention of the grant of the patent: **17.12.2008**
(21) Application number: 01932472.2
(22) Date of filing: 16.05.2001
(51) Int. Cl.: B03B 9/06, B08B 9/093

(54) **ARRANGEMENT AND METHOD FOR CLEANING AND RECLAIMING BALLAST MATERIAL, SPECIFICALLY CONCRETE BALLAST MATERIAL, AND A WATER INJECTOR STRUCTURED FOR CLEANING**
ANLAGE UND VERFAHREN ZUR REINIGUNG UND RÜCKGEWINNUNG VON BALLASTMATERIAL, INSBESONDERE BETON-BALLASTMATERIAL, SOWIE WASSERINJEKTOR ZUR REINIGUNG
DISPOSITIF ET PROCEDE DE NETTOYAGE ET DE RECUPERATION DE MATERIAU DE BALLAST NOTAMMENT DE BETON DE CAILLOUX, ET INJECTEUR D'EAU STRUCTURE POUR LE NETTOYAGE

(30) Priority: 16.05.2000 SE 0001792
(43) Date of publication of application: 02.04.2003
(73) Proprietor: Falu Process Systems AB, S-791 28 Falun (SE)
(72) Inventor: SVEDBERG, Erik, S-791 61 (SE)
(74) Representative: Lindgren, Anders
(86) International application number: PCT/SE2001/001088
(87) International publication number: WO 2001/087489

(56) References cited:
- CH-A5- 686 407
- SE-C2- 502 096
- US-A- 5 624 077
- US-A- 5 833 863
- US-A- 6 000 645

## Description

### TECHNICAL FIELD

The invention refers to arrangements in a process system for cleaning and reclaiming ballast material, such as cement ballast, and more specifically a station that is formed as a mobile unit for cleaning and for fractionation of ballast material through re-circulation of wash water and recovery of water and slurry. The invention also relates to a water injector that is incorporated in the arrangement and operative for internal spraying of the rotator or rotary drum of a cement truck, as well as to a method for cleaning and reclaiming the ballast material, especially the cement ballast material.

### PRIOR ART

Cleaning and fractionation/ sorting for recovery purposes is a process that is increasingly used to meet a shortage of ballast material in the cement industry, e.g., or other industries where ballast material is used. The material is brought to pass over screens while being flushed with pressurized water. One problem related to these procedures is the large volumes of water that is needed in order to achieve the necessary cleaning of the stone material. For that reason, a plant for cleaning the ballast material needs to be located with respect to the availability of sufficient water volumes. Also, the comparatively large volumes of water and slurry tend to cause a waste handling problem. In the future, legal demands on recovery rates may be expected, possibly to the extent of up to about 80% of the process water.

Prior art units and methods for cleaning and fractioning of ballast material are disclosed in US-A-6 000645 and US-A-5 833 863. A prior art injector is disclosed in SE-C-502 096.

### OBJECT OF INVENTION

An object for this invention is to meet these problems by providing a water saving injector that is effective for spraying/washing the internal surfaces of the rotary drum of a cement truck, as well as arrangements and procedures for re-circulation of process water and slurry to the cleaning process, and for recovery in the further production.

### SUMMARY OF INVENTION

The object is met according to the invention by suggesting a method and a mobile unit comprising screens associated with nozzle arrangements for pressurized water flushing, and means for feeding out the washed and fractionated material. The arrangements advantageously are contained in a heated and isolated container for round the year operation, and communicating with tanks having agitators for collecting water and cement slurry that is re-circulated to the washing process or recovered in the further production, after weighing in the solid content.

Other objects are met according to the invention by suggesting an injector having one or more rows of nozzles that are pointed in radial direction towards the interior of the cement truck rotary drum. In one embodiment, the injector is associated with the arrangement and adjustably supported on a foot stand to be raised or lowered, and pivotable in a vertical plane. In this embodiment, the injector is supported by the stand also to be longitudinally displaceable for insertion in the rotary drum.

### DRAWINGS

The invention is more closely described below with reference made to the accompanying, diagrammatic drawings, wherein
Fig. 1 is a sectional view showing the mobile unit for washing, fractionation and recovery of ballast material, and
Fig. 2 is a detailed, partial view showing the injector of the invention.

### DETAILED DESCRIPTION OF THE INVENTION

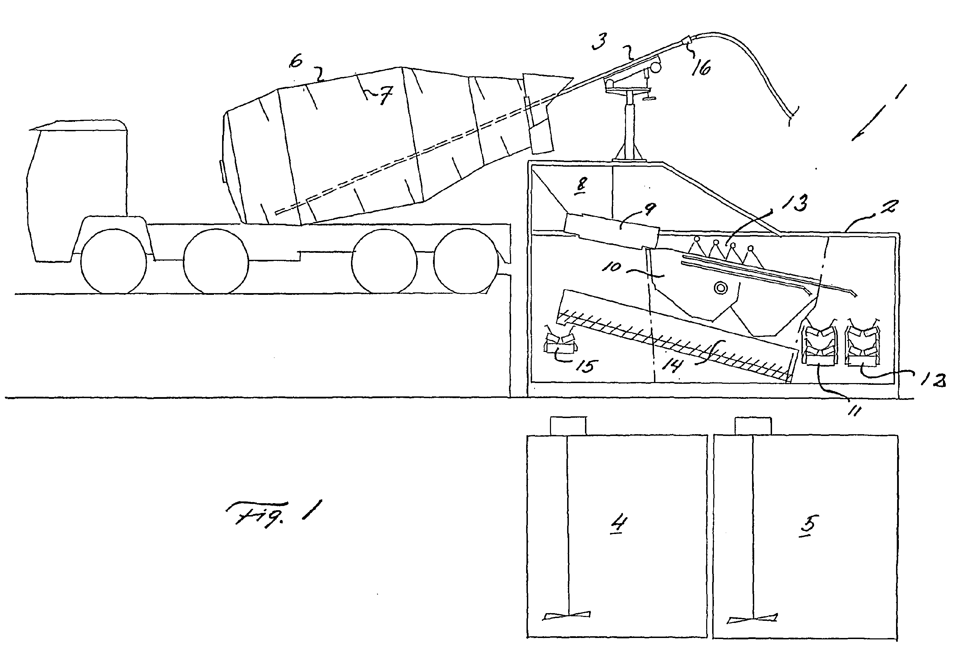

Referring to fig. 1, a mobile arrangement 1 for washing and fractionation of cement ballast is diagrammatically shown. The mobile arrangement 1 comprises a wash- and fractionation unit 2, a water injector 3, and tanks 4, 5 for collection of water and finer particles. In the drawing, a cement truck with rotary drum 6 is also shown in position for cleaning.

Internally, the rotary drum 6 conventionally has a helical vane 7 by which the cement is forced out from the drum while being rotated in one direction. By the opposite rotation, the vane causes an agitation of the cement.

The arrangement 2 comprises a hopper 8 that is assigned to receive wash water, cement and ballast material from the rotary drum 6. A vibrator 9 transports water and solid particles onto a screen assembly 10, by which larger particles are separated in one or more fractions that are fed out by means of one or more conveyors 11,12. Pressurized water is sprayed over the screen assembly 10 from an array of nozzles 13, arranged in rows there above. Water and finer particles that pass through the screen 10 are collected in a worm press 14, from where heavier and settling material is fed to a belt conveyor 15 via a worm conveyor. Finer and suspended particles, cement and process water flows from the worm press to be collected in the tanks 4,5. The process water in tanks 4,5 is alternatively re-circulated to the washing process through appropriate conduits (not shown), or re-used in the further cement production after curing of cement remains. For the latter purpose, the tanks comprise agitators that secure an even distribution of particles in the water. The solid content of the process water being re-used in production is weighed and calculated for an accurate composition of the new cement batch. Advantageously, the weighing is performed by means of an ultrasonic device and relating the solid content to the ratio of sound dampening in the process water.

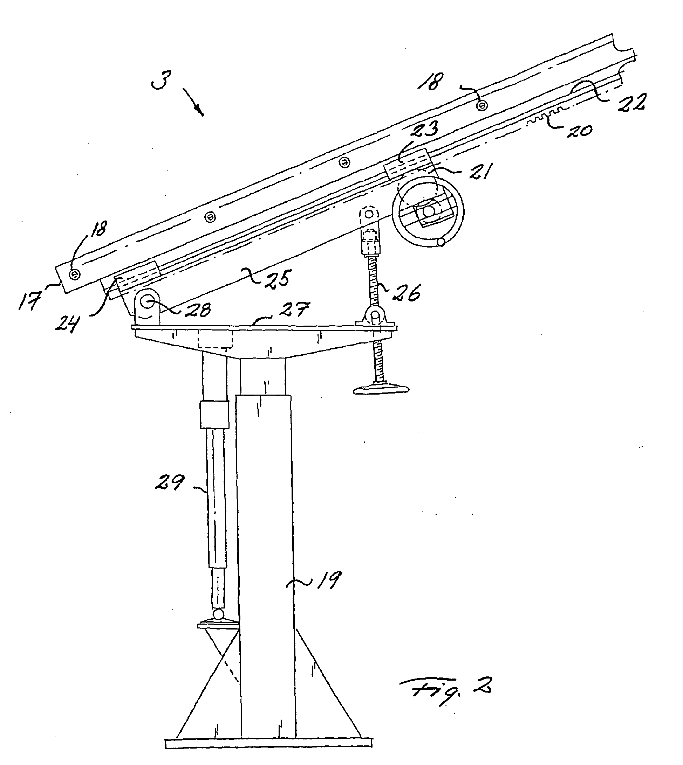

The process water that is re-circulated in the wash process is fed to the injector 3 for internally flushing the rotary drum 6. The injector 3 is more fully described below, reference being made to fig. 2.

The injector 3 comprises a tubular beam with an open, back or upper end having coupling means 16 (see fig. 1) for communicating process water form the tanks 4,5. The lower or front end 17 of the tube is closed, and one or more rows of nozzles 18 are arranged and pointing in radial directions from the periphery of the tube. Preferably, two diametrically opposite rows of nozzles are arranged in the longitudinal direction of the tube, in a common and generally horizontal plane. The nozzle openings are preferably shaped to eject process water in relatively flat spray cones, in a plane that is parallel with the axial direction of the injector, and the openings are dimensioned to avoid clogging from particles and slurry contained in the process water.

The injector 3 is supported from a foot stand 19 and displaceable in longitudinal direction. In the embodiment shown, a gear rack 20 is attached to the lower side of the injector and engaging a gear wheel 21. The gear rack is supported on a rail 22 that can slide in guides 23,24 arranged on an arm 25, the arm being pivotable in a vertical plane. The vertical angle of arm 25 and injector 3 is controlled by means of a threaded rod 26 that is operable between the arm/injector and a plate 27, arranged on the foot stand 19. Also, the arm/injector is rotatably supported on the plate by means of a pivot 28. A piston/cylinder unit 29 is arranged on the foot stand 19 for raising and lowering, respectively, of the plate 27. The foot stand supporting the injector may be pivotably associated with the wash- and fractionation unit 2.

The gear wheel 21 may be arrested in any desired position and is manually rotated or driven by a motor for extension and retraction of the injector 3. Likewise, the threaded rod 26 may be manually operated or driven by a motor, and may alternatively be exchanged for a piston/cylinder unit.

By forming the injector 3 as suggested there is achieved an efficient flushing of the rotary drum, whereby the water jets acting radially on the internal surface of the rotating drum are effective for cleaning both sides of the helical vane. This is specifically relevant for the back side of the vane, which is non-accessible by conventional hose flushing.

The ability of vertical adjustment of the injector makes it universally operable for cleaning the rotary drums of differently sized cement trucks, and the adjustable insert length makes it adaptable for rotary drums of different depths/lengths.

Alternatively, the injector and a rotary drum may be structured for temporarily or permanently attaching the injector to the rotary drum. In this alternative embodiment (not shown in the drawings), the injector is rotatably supported in the center of the rotator bottom. A support structure is arranged in the output end of the rotator and pivotally supporting the injector. In such arrangement, the injector may temporarily be fitted into the rotary drum for cleaning purposes or may permanently be supported in bearing and support means permanently arranged on the rotary drum for an efficient flushing of the inside of the drum and its helical vane after connecting the coupling means in the back or outer end of the injector to pressurized water. The outer end of the injector with coupling means may be associated with a radially enclosing cover that provides protection against wear caused from filling and emptying of the rotary drum. Said cover may be structured as a surrounding shield having a diameter that allows the injector with nozzles to be inserted there through. A divisible pivot bearing may then be mounted in a fixed support on the rotary drum for rotatably supporting the injector.

The arrangement according to the invention operates at a pressure over the nozzles 13 in the range of about 30-60 bar, preferably in the range of approximately 40-50 bar. In order to fully take advantage of this comparatively high pressure in the wash- and fractionation unit 2, said unit is structured for defining a high pressure section incorporating the nozzles 13, the screen unit 10 and the worm press 14, at least. The separated section may comprise an enclosure made of rubber cloth shields that prevent water and particles from spreading outside the high pressure section, and having openings for feeding out separated particles from the screen/ screens to the conveyors 11,12 and from the worm press 14 to the conveyor 15. Preferably, the high pressure applied to the nozzles 13 is generated in pumps with rubber membranes.

By applying a comparatively high pressure for washing the material on the screens there is achieved a substantial reduction in water consumption. Accordingly, the volumes involved are manageable for re-circulation and flushing of the rotary drum, and for recovery in the cement production, e.g.

Another advantage that is gained through the inventive arrangement is a reduction of the time needed for cleaning the rotary drum. By directing the highly pressurized water radially for substantially the whole length of the inside of the rotary drum it is no longer required to rotate the drum for a mixing operation, such that flushing and emptying of the drum may rather be performed in one single operation.

The high process pressure makes possible a continuous dewatering throughout the process, due to the resulting, reduced liquid volume. Particles passing the screen unit, but heavy enough for settling in a basin, are continuously separated from the process water by means of the worm press. The resulting slurry will merely contain finer particles having dimensions that permit re-circulation through the nozzles of the injector. The process water that is fed out from the dewatering section and the worm press is received for this purpose in two or more tanks 4,5, dimensioned relative to the production capacity. For example, the tank volumes may be in the range of approximately 25 m³ each and alternately used for re-circulation of process water through the injector, or for recovery in the further cement production. Agitators are operative in the tanks for securing an even distribution of particles in the liquid, and the solid content is controlled for weighing in the process water when producing new cement.

Thus, the invention provides a substantially closed system for reclaiming ballast material, wherein process water is both re-circulated for cleaning the rotary drum of a cement truck, and for recovery in the cement production. Further there is suggested an injector that is efficient for internally cleaning the rotary drum of the cement truck, specifically for an efficient cleaning of the helical vane that is arranged in the rotary drum. The invention is here disclosed with reference to an exemplifying embodiment, from which detailed modifications are possible without departing from the inventive teachings as such.

## Claims

1. Cleaning and fractionation arrangement for recovery of ballast material, specifically cement ballast, comprising screens (10) onto which the ballast material is forwarded under nozzles (13) for spraying pressurized water, and feeder means (11,12) for feeding out separated particle fractions, **characterized by**
- a separated high pressure section (10,13,14) in which the material that is forwarded on the screens is washed by water forced through the nozzles at a pressure in the range of 30-60 bar;
- a dewatering unit (14) comprising a worm press (14) for feeding out settling particle fractions from the high pressure section;
- at least two bulk tanks (4,5) for receiving water and suspended particle fractions from the worm press, the tanks having agitators for maintaining an even distribution of particles in the water, and from which tanks the process water is alternately provides
- for re-circulation to an injector (3) arranged for cleaning the rotary drum of a cement truck, and
- for recovery of process water in the cement production after detecting the solid content.

2. The arrangement of claim 1, **characterized in that** the high pressure section and dewatering unit are accommodated in an isolated container.

3. The arrangement of claim 1, **characterized by** an injector for internally washing the rotary drum of a cement truck, the injector comprising an elongate tubular beam (3) having one end closed and one end opened, the opened end carrying a coupling means (16) for connection to pressurized water, and the tube having a plurality of nozzles (18) disposed from the closed end and extended a considerable part length of the tube for directing jets of pressurized water in radial directions towards the inside of the rotary drum and substantially for the whole internal length of the rotary drum, the injector and rotary drum being arranged for relative rotation and for concurrently flushing and emptying the rotary drum.

4. The arrangement of claim 3, **characterized in that** the injector (3) is permanently supported in the rotary drum (6) and journalled for relative rotation thereto.

5. The arrangement of claim 3, **characterized in that** the injector (3) is support on a stand (19) with adjustable height, the injector being journalled so as to be pivotable in a vertical plane and axially displaceable for insertion into the rotary drum.

6. The arrangement of claim 3, **characterized in that** at least two diametrically opposite rows of nozzles are formed on the injector in a common plane through the longitudinal axis of the injector.

7. The arrangement of claim 6, **characterized in that** said nozzles are arranged in pairs on opposite sides of the injector.

8. The arrangement of claim 3, **characterized in that** the nozzle openings are formed for directing generally flat spray cones towards the inside of the rotary drum in a plane that is substantially parallel with the longitudinal direction of the injector.

9. The arrangement of any previous claim, **characterized by** a gear rack (20) attached to the injector and running longitudinally on the outside thereof, said gear rack being received in a guide means (23,24) arranged on the stand for sliding displacement of the injector in the longitudinal direction, the gear rack engaging a gear wheel (21) of an extension mechanism with interlocking means.

10. A method for washing and fractionation of ballast material, specifically for recovery of cement ballast material, comprising the steps of spraying pressurized water and fractionation by means of one or several screens from where separated material is fed out by means of one or several conveyors,
**characterized by**
- feeding the material through a high pressure section and washing the material that is transported on the screen/screens with water at a pressure in the range of about 30-60 bar, preferably about 40-50 bar;
- feeding out the washed material that is separated on the screens;
- dewatering and feeding out finer particles from the process water;
- saving and agitating the process water containing the finest particles remaining in the process water, both for
- re-circulating the process water for cleaning the rotary drum of a cement truck, and for
- recovery of process water in the cement production after analysis of the slurry or detection of the solid content.

11. The method of claim 10, **characterized in that** the solid content is measured by ultra sonic sounding and relating the solid content to the ratio of sound dampening in the process water.

12. The method of claim 10, **characterized in that** the process water is re-circulated for cleaning the rotary drum by spraying the inside of the drum with water jets radially directed through nozzles arranged on a tube shaped injector beam.

## Patentansprüche

1. Reinigungs- und Fraktionierungsanordnung zur Wiedergewinnung von Ballastmaterial, speziell Zementballast, umfassend Siebe (10), auf welche das Ballastmaterial unter Düsen (13) zum Sprühen von druckbeaufschlagtem Wasser gefördert wird, und Fördermitteln (11, 12) zum Ausfördern von abgetrennten Partikelfraktionen, **gekennzeichnet durch**
- einen separaten Hochdruckabschnitt (10, 13, 14), in dem das Material, das auf die Siebe weitergeleitet wird, **durch** Wasser gewaschen wird, das bei einem Druck im Bereich von 30-60 bar **durch** die Düsen gedrückt wird,
- eine Entwässerungseinheit (14) zum Ausfördern von absetzenden Partikelfraktionen aus dem Hochdruckabschnitt,
- mindestens zwei Großtanks (4, 5) zur Aufnahme von Wasser und suspendierten Partikelfraktionen von der Spiralpresse, wobei die Tanks Mischer aufweisen zur Aufrechterhaltung einer gleichmäßigen Verteilung von Partikeln in dem Wasser, und wobei aus den Tanks das Prozesswasser alternativ bereitgestellt wird
- zur Rezirkulation zu einem Injektor (3), der zur Reinigung der Drehtrommel eines Betonlasters angeordnet ist, und
- zur Wiedergewinnung von Prozesswasser in der Zementproduktion nach einer Detektion des Festkörpergehalts.

2. Anordnung gemäß Anspruch 1, **dadurch gekennzeichnet, dass** der Hochdruckabschnitt und die Entwässerungseinheit in einem isolierten Behälter beherbergt sind.

3. Anordnung gemäß Anspruch 1, **gekennzeichnet durch** einen Injektor, um die Drehtrommel eines Betonlasters innen zu waschen, wobei der Injektor einen langgestreckten, rohrförmigen Ausleger (3) mit einem geschlossenen Ende und einem geöffneten Ende aufweist, wobei das geöffnete Ende Verbindungsmittel (16) zum Verbinden mit druckbeaufschlagtem Wasser aufweist, und das Rohr eine Vielzahl von Düsen (18) aufweist, die von dem geschlossenen Ende an angeordnet sind und sich über einen beträchtlichen Längsabschnitt des Rohrs erstrecken, um Strahlen von druckbeaufschlagtem Wasser in radiale Richtungen auf das Innere der Drehtrommel zu richten und im Wesentlichen über die gesamte innere Länge der Drehtrommel, wobei der Injektor und die Drehtrommel für eine RelativDrehbewegung angeordnet sind und für eine gleichzeitige Spülung und Leerung der Drehtrommel.

4. Anordnung gemäß Anspruch 3, **dadurch gekennzeichnet, dass** der Injektor (3) dauerhaft in der Drehtrommel (6) gelagert und für eine Drehbewegung relativ dazu zapfengelagert ist.

5. Anordnung gemäß Anspruch 3, **dadurch gekennzeichnet, dass** der Injektor (3) auf einem Sockel (19) mit einstellbarer Höhe gelagert ist, wobei der Injektor zapfengelagert ist, um in einer vertikalen Ebene schwenkbar und zur Einführung in die Drehtrommel axial verschiebbar zu sein.

6. Anordnung gemäß Anspruch 3, **dadurch gekennzeichnet, dass** mindestens zwei, einander gegenüberliegende Reihen von Düsen an dem Injektor in einer gemeinsamen Ebene durch die Längsachse des Injektors gebildet sind.

7. Anordnung gemäß Anspruch 6, **dadurch gekennzeichnet, dass** die Düsen in Paaren auf gegenüberliegenden Seiten des Injektors angeordnet sind.

8. Anordnung gemäß Anspruch 3, **dadurch gekennzeichnet, dass** die Düsenöffnungen ausgebildet sind, um im Allgemeinen flache Sprühkegel direkt gegen die Innenseite der Drehtrommel in einer Ebene zu richten, die im Wesentlichen parallel zu der Längsrichtung des Injektors ist.

9. Anordnung nach einem vorangehenden Anspruch, **gekennzeichnet durch** eine Zahnstange (20), die an dem Injektor angebracht ist und an dessen Außenseite in Längsrichtung verläuft, wobei die Zahnstange in Führungsmitteln (23, 24) aufgenommen wird, die an dem Sockel angeordnet sind zur gleitenden Verschiebung des Injektors in der Längsrichtung, wobei die Zahnstange in ein Zahnrad (21) eines Verlängerungsmechanismusses mit Verriegelungsmitteln.

10. Verfahren zum Waschen und Fraktionieren von Ballastmaterial, speziell zur Wiedergewinnung von Zementballastmaterial, umfassend die Schritte des Sprühens von druckbeaufschlagtem Wasser und der Fraktionierung mittels eines oder mehrerer Siebe, von wo getrenntes Material mittels eines oder mehrerer Förderer ausgefördert wird, **gekennzeichnet durch**
- Fördern des Materials **durch** einen Hochdruckabschnitt und Waschen des Materials, das auf das Sieb / die Siebe transportiert wird mit Wasser bei einem Druck in dem Bereich von 30-60 bar, vorzugsweise ungefähr 40-50 bar,
- Ausfördern des gewaschenen Materials, das auf den Sieben getrennt wird,
- Entwässerung und Ausfördern feinerer Partikel aus dem Prozesswasser,
- Aufheben und Mischen des Prozesswassers, das die feinsten Partikel enthält, die in dem Prozesswasser verblieben sind sowohl zur
- Rezirkulation des Prozesswassers zum Reinigen der Drehtrommel eines Betonlasters und zur
- Wiedergewinnung von Prozesswasser bei der Zementproduktion nach einer Analyse des Schlamms oder einer Detektion des Feststoffgehalts.

11. Verfahren gemäß Anspruch 10, **dadurch gekennzeichnet, dass** der Feststoffgehalt durch Ultraschallbeschallung gemessen und der Feststoffgehalt in Bezug zu dem Verhältnis der Schalldämpfung in dem Prozesswasser gesetzt wird.

12. Verfahren gemäß Anspruch 10, **dadurch gekennzeichnet, dass** das Prozesswasser rezirkuliert wird, um die Drehtrommel zu reinigen, indem die Innenseite der Trommel mit Wasserstrahlen besprüht wird, die radial ausgerichtet sind durch die Düsen, die an einem rohrförmigen Injektorausleger angeordnet sind.

## Revendications

1. Agencement de nettoyage et de fractionnement pour la récupération de matériau de ballast, spécifiquement de ballast de ciment, comprenant des tamis (10) sur lesquels le matériau de ballast est acheminé sous des buses (13) qui pulvérisent de l'eau sous pression, et des moyens d'avance (11, 12) pour extraire des fractions de particules séparées,
**caractérisé par**
- une section à haute pression (10, 13, 14) séparée dans laquelle le matériau qui est acheminé sur les tamis est lavé par de l'eau envoyée de force à travers les buses à une pression dans la plage de 30 à 60 bars ;
- une unité de décantation (14) comprenant une presse à vis sans fin (14) pour extraire les fractions de particules de décantation de la section à haute pression ;
- au moins deux réservoirs de matériau en vrac (4, 5) pour recevoir l'eau et les fractions de particules en suspension provenant de la presse à vis sans fin, les réservoirs comportant des agitateurs pour maintenir une répartition uniforme des particules dans l'eau, et à partir desquels réservoirs l'eau de traitement est fournie en alternance
- pour une recirculation vers un injecteur (3) agencé pour nettoyer le tambour rotatif d'un camion bétonnière, et
- pour une récupération de l'eau de traitement dans la production de ciment après détection du contenu solide.

2. Agencement selon la revendication 1,
**caractérisé en ce que** la section à haute pression et l'unité de décantation sont logées dans un conteneur isolé.

3. Agencement selon la revendication 1,
**caractérisé par** un injecteur pour laver l'intérieur du tambour rotatif d'un camion bétonnière, l'injecteur comprenant une poutre tubulaire (3) allongée ayant une extrémité fermée et une extrémité ouverte, l'extrémité ouverte supportant des moyens d'accouplement (16) pour un raccordement à de l'eau sous pression, et le tube comportant une pluralité de buses (18) disposées à partir de l'extrémité fermée et s'étendant sur une longueur importante du tube pour diriger des jets d'eau sous pression dans des directions radiales vers l'intérieur du tambour rotatif et sensiblement sur la longueur interne entière du tambour rotatif, l'injecteur et le tambour rotatif étant agencés pour effectuer une rotation relative et pour rincer et vider simultanément le tambour rotatif.

4. Agencement selon la revendication 3,
**caractérisé en ce que** l'injecteur (3) est supporté en permanence dans le tambour rotatif (6) et monté pour effectuer une rotation relative par rapport à celui-ci.

5. Agencement selon la revendication 3,
**caractérisé en ce que** l'injecteur (3) est supporté sur un socle (19) ayant une hauteur ajustable, l'injecteur étant monté de manière à pouvoir pivoter dans un plan vertical et à pouvoir être déplacé axialement pour son insertion dans le tambour rotatif.

6. Agencement selon la revendication 3,
**caractérisé en ce qu'**au moins deux rangées diamétralement opposées de buses sont formées sur l'injecteur dans un plan commun le long de l'axe longitudinal de l'injecteur.

7. Agencement selon la revendication 6,
**caractérisé en ce que** lesdites buses sont agencées par paires sur des côtés opposés de l'injecteur.

8. Agencement selon la revendication 3,
**caractérisé en ce que** les ouvertures de buse sont formées pour diriger des cônes de pulvérisation généralement plats vers l'intérieur du tambour rotatif dans un plan qui est sensiblement parallèle à la direction longitudinale de l'injecteur.

9. Agencement selon l'une quelconque des revendications précédentes, **caractérisé par** une crémaillère (20) fixée à l'injecteur et s'étendant longitudinalement sur l'extérieur de celui-ci, ladite crémaillère étant reçue dans des moyens de guidage (23, 24) agencés sur le socle pour un déplacement coulissant de l'injecteur dans la direction longitudinale, la crémaillère venant en prise avec un pignon (21) d'un mécanisme d'extension comportant des moyens de verrouillage.

10. Procédé pour le lavage et le fractionnement de matériau de ballast, spécifiquement pour la récupération de matériau de ballast de ciment, comprenant les étapes de pulvérisation d'eau sous pression et de fractionnement au moyen d'un ou de plusieurs tamis d'où un matériau séparé est extrait au moyen d'un ou de plusieurs transporteurs, **caractérisé en ce qu'**il consiste à :
- avancer le matériau à travers une section à haute pression et laver le matériau qui est transporté sur le/les tamis avec de l'eau à une pression dans la plage d'environ 30 à 60 bars, de préférence d'environ 40 à 50 bars ;
- extraire le matériau lavé qui est séparé sur les tamis ;
- décanter et extraire les particules plus fines de l'eau de traitement ;
- récupérer et agiter l'eau de traitement contenant les particules les plus fines restant dans l'eau de traitement, à la fois pour
- faire recirculer l'eau de traitement pour nettoyer le tambour rotatif d'un camion bétonnière, et pour
- récupérer l'eau de traitement dans la production de ciment après analyse de la pâte ou détection du contenu solide.

11. Procédé selon la revendication 10, **caractérisé en ce que** le contenu solide est mesuré en appliquant des ultrasons et en associant le contenu solide au rapport d'amortissement des sons dans l'eau de traitement.

12. Procédé selon la revendication 10, **caractérisé en ce qu'**une recirculation de l'eau de traitement est effectuée pour nettoyer le tambour rotatif par la pulvérisation, à l'intérieur du tambour, de jets d'eau dirigés radialement à travers des buses agencées sur une poutre d'injecteur en forme de tube.
